# EUROPÄISCHE PATENTSCHRIFT

(11) **EP 1 359 398 B1**
(45) Veröffentlichungstag und Bekanntmachung des Hinweises auf die Patenterteilung: **27.05.2009**
(21) Anmeldenummer: 03450099.1
(22) Anmeldetag: 24.04.2003
(51) Int. Cl.: G01F 23/14, G01F 25/00, F04B 51/00

(54) **Verfahren zur Bestimmung des aktuellen Füllstandes einer Flüssigkeit in einem Behälter**
Method for determining the current level of a liquid in a container
Méthode pour la détermination du niveau actuel d'un liquide dans un réservoir

(30) Priorität: 30.04.2002 AT 6632002
(43) Veröffentlichungstag der Anmeldung: 05.11.2003
(73) Patentinhaber: F. Hoffmann-La Roche AG, 4070 Basel (CH)
(72) Erfinder: Huemer, Herfried, 8330 Feldbach (AT); Rüther, Horst, 8047 Hart / Graz (AT)
(74) Vertreter: Babeluk, Michael

(56) Entgegenhaltungen:
- EP-A- 0 372 631
- DE-A- 4 010 763
- DE-A- 4 129 549
- DE-A- 19 826 487
- US-A- 5 802 910

## Beschreibung

Die Erfindung betrifft ein Verfahren zur Bestimmung des aktuellen Füllstandes einer Flüssigkeit, vorzugsweise eines Kalibrier-, Qualitätskontroll- oder Reinigungsmittels oder von Abwasser, in einem Behälter, beispielsweise eines Analysators, wobei in die Flüssigkeit des Behälters ein Tauchrohr zum Befüllen oder Entleeren des Behälters eintaucht, welches über ein Leitungssystem mit einer Pumpeinrichtung verbunden und mit einem gasförmigen Medium, vorzugsweise Luft, beaufschlagbar ist, wobei der Druck p im Leitungssystem gemessen wird.

Es sind bereits unterschiedlichste Verfahren und Vorrichtungen bekannt, mit welchen der Füllstand einer Flüssigkeit in einem Behälter auf unterschiedliche Art und Weise gemessen werden kann. Neben rein mechanischen Methoden mit Schwimmern, welche mit einer Anzeigeeinrichtung verbunden sind, gibt es eine Reihe von physikalischen Messverfahren, welche mit Hilfe von Sensoren die Änderung eines physikalischen Parameters in einem Steig- oder Tauchrohr für die Flüssigkeit bestimmen, wobei Sensoren beschrieben werden, die mit der zu messenden Flüssigkeit in Kontakt stehen (z.B. Leitfähigkeitssensoren, Widerstandssensoren, etc.) oder auch Sensoren, die mit der Flüssigkeit nur in indirektem Kontakt stehen (z.B. optische Sensoren, Messung der Dielektrizität, etc.). Nachteilig bei all diesen Messverfahren bzw. Messvorrichtungen ist die Tatsache, dass derartige Sensoren relativ teuer sind, insbesondere bei Kontakt mit der Flüssigkeit nur eine beschränkte Standzeit aufweisen, und insbesondere bei Wegwerf- bzw. Einmalbehältern, wie sie beispielsweise in der medizinischen Analytik verwendet werden, eine zu kostenintensive Lösung darstellen.

So existieren beispielsweise bei medizinischen Analysatoren Vorrichtungen, welche die Füllmenge bzw. den Füllstand der angeschlossenen Behälter dadurch bestimmen, dass die bewegten Flüssigkeitsmengen, z.B. über die Pumpleistung, genau erfasst und in einem Speicher des Analysators abgelegt werden. Bei Verwendung von Normbehältern mit bekanntem Ausgangsfüllstand kann so über die abgespeicherte Mengenbilanz eine Aussage über den jeweiligen Füllstand der einzelnen Behälter getroffen werden. Nachteilig dabei ist, dass das System nur dann funktioniert, wenn die Leistung des eingesetzten Pump- bzw. Saugsystems über lange Zeit als konstant angesehen werden kann, was allerdings bei den verwendeten Schlauchpumpen meist nicht der Fall ist. Weiters ist es bei einem derartigen Verfahren nicht möglich, teilgefüllte Behälter zwischen einzelnen gleichartigen Analysatoren auszutauschen.

Aus der DE 198 26 487 A1 ist z.B. eine Füllstandsmessvorrichtung zur Messung von Füllständen einer Flüssigkeit in einem Behältnis bekannt geworden, welche nach dem hydrostatischen Prinzip arbeitet und eine in die Flüssigkeit eintauchende Leitung aufweist, die mittels einer Pumpe mit einem gasförmigen Medium, insbesondere Luft, beaufschlagbar ist. Bei Beaufschlagung mit dem gasförmigen Medium treten am eingetauchten Ende der Leitung Blasen aus, wobei ein Drucksensor elektrische Signale entsprechend dem zeitlichen Druckverlauf in der Leitung aufnimmt. In einer Auswerteeinrichtung wird der charakteristische Druckverlauf bei Austritt der Blasen erkannt und bei Erreichen dieses Zustandes der Druck berechnet und daraus in weiterer Folge der Füllstand sowie das im Behältnis befindliche Flüssigkeitsvolumen ermittelt.

Die EP 0 372 631 beschreibt ein Verfahren zur Bestimmung des Füllstandes unter Verwendung eines Druckdifferenzsensors, welcher die Differenz zwischen dem Druck der an einem in der Flüssigkeit befindlichen und mit Gas beaufschlagtem Sensorkopf anliegt, und dem Druck der über dem Flüssigkeitsspiegel liegt, bestimmt. Dieses Verfahren ist vor allem für Füllstandsmessungen in geschlossenen und unter Druck stehenden Behältern, wie Flüssiggastanks, geeignet, da hier ein Druckdifferenzsensor eingesetzt wird, welcher die Druckdifferenz zwischen zwei innerhalb des Behälters befindlichen Bereichen bestimmt.

Aus der DE 41 29 549 ist ein Verfahren zur Füllstandsbestimmung bekannt, welches auf der Ermittlung mehrerer aufeinander folgender Drucksprünge an definierten Querschnittveränderungen eines speziellen Taubrohrs beruht. Dieses Verfahren der Füllstandsbestimmung erfordert eine Mehrzahl von Querschnittänderungen in einem Tauchrohr, deren Abstand zueinander und vom Behälterboden bekannt sein muss, um daraus den Füllstand bestimmen zu können.

Die US 5,802,910 beschreibt ein Verfahren zur Bestimmung von Füllständen in mehreren Behältern, bei welchen in den einzelnen Behältern jeweils Füllstandsmessvorrichtungen nach dem Tauchrohrprinzip angeordnet sind, welche jeweils einen Drucksensor beihalten. Diese einzelnen Füllstandsmessvorrichtungen können über einen gemeinsamen Schaltpunkt nacheinander von einer zentralen Erfassung- und Auswerteelektronik abgefragt werden, um so die Füllstände der einzelnen Behälter zu ermitteln.

Aufgabe der vorliegenden Erfindung ist es, ein möglichst einfaches Verfahren zur Bestimmung des aktuellen Füllstandes einer Flüssigkeit in einem Behälter vorzuschlagen, welches weitgehend ohne zusätzliche Bauteile auskommt und wobei beispielsweise auch Schlauchpumpen mit einer variablen Fördermenge zum Einsatz kommen können. Gemäß einer weiteren Aufgabe der Erfindung sollen die bei der Füllstandsbestimmung verwendeten Komponenten auf einfache Weise kalibriert und überprüft werden können.

Diese Aufgabe wird gemäß einer ersten Ausführungsvariante durch ein Verfahren zum Füllen einer Flüssigkeit in einen oder zum Entnehmen einer Flüssigkeit aus einem Behälter eines Analysators und zur Bestimmung des aktuellen Füllstandes der Flüssigkeit in diesem Behälter mittels eines gemeinsamen Tauchrohres gelöst, welches in die Flüssigkeit des Behälters eintaucht, wobei das Füllen oder Entnehmen der Flüssigkeit über das Tauchrohr erfolgt, welches über ein Leitungssystem mit einer Pumpeinrichtung verbunden ist und mit einem gasförmigen Medium, vorzugsweise Luft, beaufschlagbar ist, und wobei die Bestimmung des aktuellen Füllstandes der Flüssigkeit in diesem Behälter dadurch erfolgt, dass der Druck p im Leitungssystem entsprechend dem zeitlichen Druckverlauf durch einen Drucksensor gemessen und ausgehend vom Umgebungsdruck p₀ so weit erhöht wird, bis durch den Austritt der sich im Tauchrohr befindenden Flüssigkeitssäule bei einem Druck p₁ eine unstetige Druckänderung auftritt, wobei die Druckdifferenz zwischen dem Umgebungsdruck p₀ und dem Druck p₁ bei der unstetigen Druckänderung oder die Zeit t₁ bis zum Erreichen der unstetigen Druckänderung ermittelt und daraus der aktuelle Füllstand des Behälters berechnet wird.

Gemäß einer zweiten Ausführungsvariante ist ebenfalls ein Verfahren zum Füllen einer Flüssigkeit in einen oder zum Entnehmen einer Flüssigkeit aus einem Behälter eines Analysators und zur Bestimmung des aktuellen Füllstandes der Flüssigkeit in diesem Behälter mittels eines gemeinsamen Tauchrohres vorgesehen, welches in die Flüssigkeit des Behälters eintaucht, wobei das Füllen oder Entnehmen der Flüssigkeit über das Tauchrohr erfolgt, welches über ein Leitungssystem mit einer Pumpeinrichtung verbunden ist und mit einem gasförmigen Medium, vorzugsweise Luft, beaufschlagbar ist, und wobei die Bestimmung des aktuellen Füllstandes der Flüssigkeit in diesem Behälter dadurch erfolgt, dass der Druck p im Leitungssystem entsprechend dem zeitlichen Druckverlauf durch einen Drucksensor gemessen und ausgehend vom Umgebungsdruck p₀ so weit abgesenkt wird, bis die Flüssigkeitssäule im Tauchrohr bis zu einer über dem maximalen Füllstand der Flüssigkeit liegenden Querschnittsveränderung gelangt, so dass durch den Kontakt der Flüssigkeitssäule mit der Querschnittsveränderung bei einem Druck p₂ eine unstetige Druckänderung auftritt, wobei die Druckdifferenz zwischen dem Umgebungsdruck p₀ und dem Druck p₂ bei der unstetigen Druckänderung oder die Zeit t₂ bis zum Erreichen der unstetigen Druckänderung ermittelt und daraus der aktuelle Füllstand des Behälters berechnet wird.

Ist beispielsweise die Zeitspanne T bekannt, die die Pumpeinrichtung benötigt, um die Flüssigkeitssäule vom Austrittsende des Tauchrohrs bis zur Querschnittsveränderung zu pumpen, so kann aus der gemessenen Zeit t₁ (Zeit bis zum Erreichen der ersten unstetigen Druckänderung ausgehend vom jeweiligen Füllstand) mit 100t₁/T der Füllstand der Flüssigkeitssäule im Tauchrohr und somit im Behälter in Prozent der Tauchrohrlänge angegeben werden.

Bei einer Anwendung des erfindungsgemäßen Verfahrens, beispielsweise für Analysengeräte in der Medizintechnik, sind in vorteilhafter Weise alle Einrichtungen, die zur Durchführung des erfindungsgemäßen Verfahrens notwendig sind, bereits im Analysator vorhanden. Dies trifft insbesondere dann zu, wenn - wie beispielsweise bei Blutgas-Multianalysatoren - im Leitungssystem ein Drucksensor zur Bestimmung des barometrischen Luftdruckes vorhanden ist.

Die Erfindung wird in den folgenden Ausführungen anhand eines medizinischen Analysators näher erläutert. Es sei allerdings darauf hingewiesen, dass sich das erfindungsgemäße Verfahren zur Füllstandsmessung für unterschiedlichste Anwendungsgebiete eignet, insbesondere solche, bei welchen der Füllstand brennbarer, toxischer oder ätzender Flüssigkeiten bestimmt werden muss. Es zeigen
- Fig. 1: eine Vorrichtung zur Durchführung des erfindungsgemäßen Verfahrens in einer schematischen Darstellung samt Pumpeinrichtung und Druckmesseinrichtung,
- Fig. 2: ein Diagramm, welches die Bestimmung der Förderleistung einer Pumpe veranschaulicht sowie
- Fig. 3: ein Diagramm zur Kalibration eines Drucksensors.

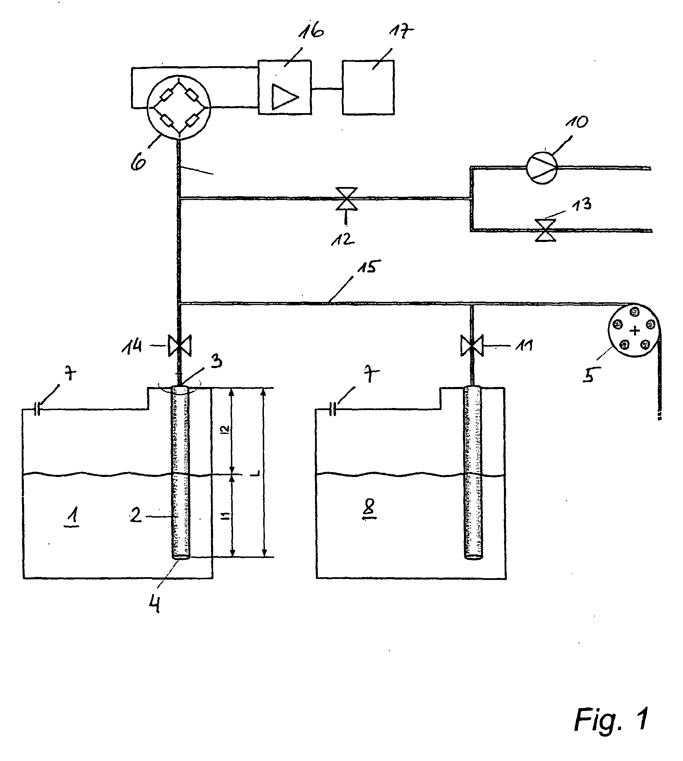

Fig. 1 zeigt in diesem Zusammenhang eine Entnahme- und Fülleinrichtung, welche aus einem Behälter 1 eines nicht weiter dargestellten Analysators eine Flüssigkeit, beispielsweise eine Kalibrier-, Qualitätskontroll- oder Reinigungsflüssigkeit über ein in die Flüssigkeit eintauchendes Tauchrohr 2 entnimmt. Das Tauchrohr 2 reicht mit seinem Austrittsende 4 bis knapp an den Boden des Behälters 1 und weist über dem maximalen Füllvolumen des Behälters eine Querschnittsveränderung 3 auf, welche im dargestellten Beispiel als Verjüngung dargestellt ist. Es wäre allerdings im Rahmen der Erfindung auch möglich, die Querschnittsveränderung 3 als Erweiterung des Querschnittes auszubilden. Das Tauchrohr 2 zum Entleeren des Behälters 1 steht über ein Leitungssystem 15 mit einer Schlauchpumpe 5 der Pumpeinrichtung in Verbindung, wobei über eine Stichleitung 9, vorzugsweise mit eingebautem Tröpfchenfänger, ein Drucksensor 6 (Baro-Sensor) an das Leitungssystem angeschlossen ist. Mit Bezugszeichen 16 ist eine Verstärkereinheit und mit Bezugszeichen 17 die Signalauswertung des Drucksensors 6 gekennzeichnet.

Über ein Ventil 11 ist ein weiterer Behälter 8, beispielsweise ein Abfallbehälter, an das Leitungssystem 15 angeschlossen, welcher die Abwässer des Analysators aufnimmt. Die beiden Behälter 1 und 8 können über die Ventile 11 und 14 wahlweise der Pumpeinrichtung 5 zugeschaltet werden. Dem Leitungssystem 15 kann über ein weiteres Ventil 12 eine Vakuumpumpe 10 zugeschaltet werden, wobei das Leitungssystem über ein Belüftungsventil 13 mit dem Umgebungsdruck p₀ beaufschlagt werden kann. Zur problemlosen Befüllung des Behälters 8 bzw. Entnahme der Flüssigkeit aus dem Behälter 1 weisen diese jeweils über dem Flüssigkeitsspiegel liegende Be- und Entlüftungsöffnungen 7 auf.

Gemäß einer Weiterbildung der Erfindung ist vorgesehen, dass die gemessene Druckdifferenz zwischen dem Umgebungsdruck p₀ und dem Druck p₁ oder p₂ bei einer der beiden unstetigen Druckänderungen mit dem Betrag der Druckdifferenz |p₁-p₂| kalibriert wird. Auf diese Art erhält man eine genaue Aussage über den Füllstand, welcher vom Umgebungsdruck p₀ unabhängig ist. Weiters bleibt eine kontinuierliche Änderung der Steilheit des Drucksensors (beispielsweise durch Alterung) ohne Einfluss auf die Messgenauigkeit der Füllstandsmessung.

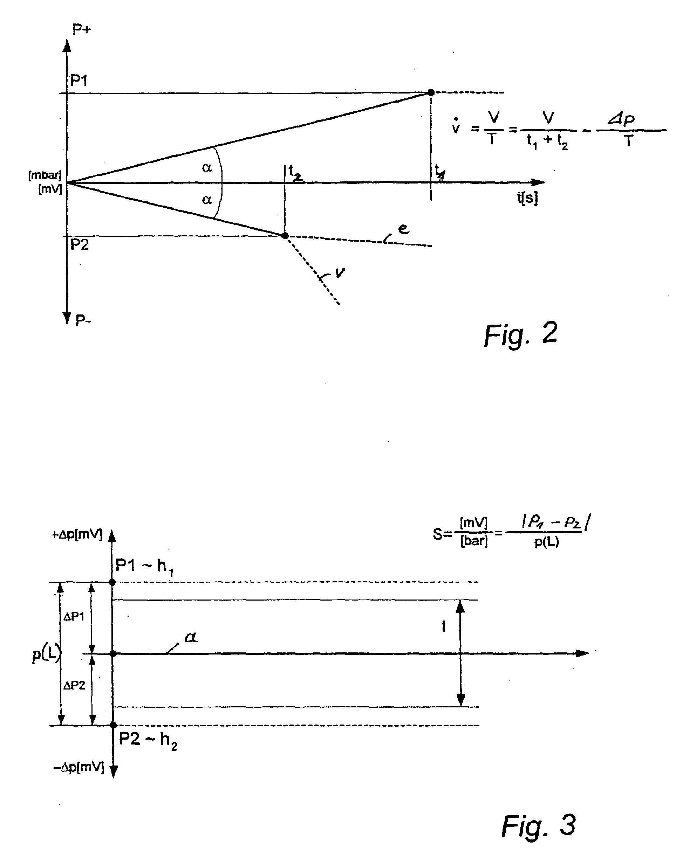

Die Änderung des Druckes p im Leitungssystem, angegeben in mbar bzw. mV in Abhängigkeit von der Zeit t, ist in Fig. 2 dargestellt. Der Druck im Leitungssystem wird beispielsweise erhöht, bis beim Druck p₁ am Ende des Tauchrohres Luftblasen austreten und eine erste unstetige Druckänderung zum Zeitpunkt t₁ festgestellt werden kann. Andererseits kann der Druck im Leitungssystem abgesenkt werden, so dass die Flüssigkeitssäule im Tauchrohr bis zu einer Querschnittsveränderung gelangt und beim Druck p₂ zur Zeit t₂ eine zweite unstetige Druckänderung bzw. ein Knick in der Druckkurve auftritt. Bei einer Querschnittsverengung ergibt sich die punktierte Druckkurve v bei einer Querschnittserweiterung die Druckkurve e.

Gemäß einer weiteren Ausführungsvariante der Erfindung kann die Zeitspanne T gemessen werden, welche die Pumpeinrichtung benötigt, um die Flüssigkeitssäule vom Austrittsende des Tauchrohrs bis zur Querschnittsveränderung oder umgekehrt von der Querschnittsveränderung zum Austrittsende zu bewegen. Anschließend wird die Flüssigkeitssäule ausgehend vom jeweiligen Füllstand beim Umgebungsdruck p₀ bis zum Austrittsende oder bis zur Querschnittsveränderung bewegt, die dafür nötige Zeit t₁ oder t₂ gemessen und mit der Zeitspanne T kalibriert. Bei dieser Verfahrensvariante erfolgt bei jeder Füllstandsmessung eine Kalibrierung über die Gesamtzeit T, sodass eine genaue Füllstandsmessung selbst bei Pumpen mit variabler Fördermenge gewährleistet ist.

Beispielsweise kann die Messung des Füllstandes folgendermaßen durchgeführt werden:

Die Flüssigkeitssäule im Tauchrohr wird mittels Druckerhöhung im Leitungssystem soweit abgesenkt, bis keine Druckänderung mehr registriert wird (bis Luftblasen am Ende des Tauchrohrs austreten). Dann wird die Flüssigkeit im Tauchrohr bis zur Stelle der Querschnittsveränderung hochgesaugt und die Gesamtzeit T, die die Flüssigkeit vom Austrittsende des Tauchrohres bis zur Querschnittsveränderung benötigt, bestimmt. Diese Zeit wird mit jener Zeit t₁ oder t₂ verglichen, die benötigt wird, die Flüssigkeit im Tauchrohr, ausgehend vom jeweiligen Füllstand, bis zur Querschnittsveränderung hinauf zu saugen oder bis zum Austrittsende hinunter zudrücken. Über diese Zeit t₁ oder t₂ kann auf die tatsächliche Füllstandshöhe geschlossen werden.

Das erfindungsgemäße Verfahren zeichnet sich weiters dadurch aus, dass zur Bestimmung der Füllstände mehrerer Behälter einer Vorrichtung die Tauchrohre der einzelnen Behälter der Reihe nach dem Leitungssystem zugeschaltet werden. Es müssen somit nicht für jeden Behälter eines Analysators eigene Messeinrichtungen vorgesehen sein, da lediglich durch Umschalten von an sich bereits im Leitungssystem vorhandenen Ventilen der Reihe nach der aktuelle Füllstand der einzelnen Behälter mit nur einer Messeinrichtung bestimmt werden kann.

Wie anhand des Diagramms gemäß Fig. 2 ersichtlich, kann ohne zusätzliche Elemente auch die Pumpleistung der Pumpeinrichtung der Füll- und Entnahmeeinrichtung bestimmt werden, welche Pumpeinrichtung über das Leitungssystem mit dem Tauchrohr zum Befüllen oder Entleeren eines Behälters verbunden ist, wobei das Tauchrohr in die Flüssigkeit im Behälter eintaucht.

Erfindungsgemäß ist dabei vorgesehen, dass der Druck p im Leitungssystem gemessen und ausgehend vom Umgebungsdruck p₀ so weit erhöht wird, bis durch den Austritt der sich im Tauchrohr befindenden Flüssigkeitssäule eine erste unstetige Druckänderung auftritt, dass der Druck p im Leitungssystem so weit abgesenkt wird, bis die Flüssigkeitssäule im Tauchrohr bis zu einer über dem maximalen Füllstand der Flüssigkeit liegenden Querschnittsveränderung gelangt, so dass durch den Kontakt der Flüssigkeitssäule mit der Querschnittsveränderung eine zweite unstetige Druckänderung auftritt, dass die Zeitspanne T, welche die Pumpeinrichtung benötigt um die Flüssigkeitssäule von einer der beiden unstetigen Druckänderung zur anderen zu bewegen, herangezogen wird, um bei bekanntem Volumen V des Tauchrohres zwischen Austrittsende und Querschnittsveränderung die Pumpleistung Δv/Δt aus dem Verhältnis V/T zu bestimmen.

In einer Weiterbildung der Erfindung ist vorgesehen, dass die Druckdifferenz |p₁-p₂| zwischen den beiden unstetigen Druckänderungen herangezogen wird, um bei bekannter Länge L des Tauchrohres zwischen Austrittsende und Querschnittsveränderung die Steilheit S des Drucksensors mit Hilfe des hydrostatischen Druckes p(L) der Flüssigkeitssäule zu bestimmen. Wenn die Länge L des Saugrohres bekannt ist, lässt sich somit auf einfache Weise die Steilheit des Drucksensors bestimmen. Hierzu wird der Druckunterschied bei gänzlich leergedrücktem Tauchrohr und bis zur Querschnittsveränderung gefülltem Tauchrohr gemessen.

Die Steilheit S ist somit gegeben durch (| p₁-p₂| )/p(L), wobei p(L) dem Kalibrationsdruck der Wassersäule der Höhe L entspricht In diesem Zusammenhang sei auf Fig. 3 verwiesen, wo mit der Linie a der aktuelle Luftdruck p₀ angedeutet wird.

Mit dem erfindungsgemäßen Verfahren ist es weiters möglich festzustellen, ob an einer Zweigleitung des Leitungssystems ein Gefäß angeschlossen ist oder nicht. Das ist insbesondere bei den Abwasserbehältern von Bedeutung, da verhindert werden muss, dass kontaminierte biologische Proben ungehindert austreten können. Die Prüfung kann derart erfolgen, dass im Leitungssystem entweder mit der Schlauchpumpe 5 oder der Vakuumpumpe 10 ein Unterdruck erzeugt wird. Durch die Belüftungsöffnung 7 des Abfallgefäßes 8, welches einen definierten Durchmesser aufweist, stellt sich ein bestimmter Druckwert ein, welcher sich vom Druckwert unterscheidet, wenn kein Gefäß angeschlossen ist.

Weiters ist es mit dem gegenständlichen Verfahren auch möglich, festzustellen, ob ein angeschlossener Behälter leer ist bzw. es kann die Dichtheit der Behälter bzw. Behälterverschlüsse überprüft werden, wobei mit Hilfe der Pumpeinrichtung (Schlauchpumpe 5 oder Vakuumpumpe 10) ein Über- oder Unterdruck im Leitungssystem erzeugt und die sich ergebende Druckkurve analysiert wird. Durch einen Vergleich mit abgespeicherten Sollwerten können allfällige Systemmängel festgestellt werden.

## Patentansprüche

1. Verfahren zum Füllen einer Flüssigkeit in einen oder zum Entnehmen einer Flüssigkeit aus einem Behälter (1) eines Analysators und zur Bestimmung des aktuellen Füllstandes der Flüssigkeit in diesem Behälter (1) mittels eines gemeinsamen Tauchrohres (2), welches in die Flüssigkeit des Behälters (1) eintaucht, wobei das Füllen oder Entnehmen der Flüssigkeit über das Tauchrohr (2) erfolgt, welches über ein Leitungssystem (15) mit einer Pumpeinrichtung (5) verbunden ist und mit einem gasförmigen Medium, vorzugsweise Luft, beaufschlagbar ist, und wobei die Bestimmung des aktuellen Füllstandes der Flüssigkeit in diesem Behälter (1) **dadurch** erfolgt, dass der Druck p im Leitungssystem (15) entsprechend dem zeitlichen Druckverlauf durch einen Drucksensor (6) gemessen und ausgehend vom Umgebungsdruck p₀ so weit erhöht wird, bis durch den Austritt der sich im Tauchrohr (2) befindenden Flüssigkeitssäule bei einem Druck p₁ eine unstetige Druckänderung auftritt, wobei die Druckdifferenz zwischen dem Umgebungsdruck p₀ und dem Druck p₁ bei der unstetigen Druckänderung oder die Zeit t₁ bis zum Erreichen der unstetigen Druckänderung ermittelt und daraus der aktuelle Füllstand des Behälters (1) berechnet wird.

2. Verfahren zum Füllen einer Flüssigkeit in einen oder zum Entnehmen einer Flüssigkeit aus einem Behälter (1) eines Analysators und zur Bestimmung des aktuellen Füllstandes der Flüssigkeit in diesem Behälter (1) mittels eines gemeinsamen Tauchrohres (2), welches in die Flüssigkeit des Behälters (1) eintaucht, wobei das Füllen oder Entnehmen der Flüssigkeit über das Tauchrohr (2) erfolgt, welches über ein Leitungssystem (15) mit einer Pumpeinrichtung (5) verbunden ist und mit einem gasförmigen Medium, vorzugsweise Luft, beaufschlagbar ist, und wobei die Bestimmung des aktuellen Füllstandes der Flüssigkeit in diesem Behälter (1) dadurch erfolgt, dass der Druck p im Leitungssystem (15) entsprechend dem zeitlichen Druckverlauf durch einen Drucksensor (6) gemessen und ausgehend vom Umgebungsdruck p₀ so weit abgesenkt wird, bis die Flüssigkeitssäule im Tauchrohr (2) bis zu einer über dem maximalen Füllstand der Flüssigkeit liegenden Querschnittsveränderung (3) gelangt, so dass durch den Kontakt der Flüssigkeitssäule mit der Querschnittsveränderung (3) bei einem Druck p₂ eine unstetige Druckänderung auftritt, wobei die Druckdifferenz zwischen dem Umgebungsdruck p₀ und dem Druck p₂ bei der unstetigen Druckänderung oder die Zeit t₂ bis zum Erreichen der unstetigen Druckänderung ermittelt und daraus der aktuelle Füllstand des Behälters (1) berechnet wird.

3. Verfahren nach Anspruch 1 und 2, **dadurch gekennzeichnet, dass** die gemessene Druckdifferenz zwischen dem Umgebungsdruck p₀ und dem Druck p₁ oder p₂ bei einer der beiden unstetigen Druckänderungen mit dem Betrag der Druckdifferenz |p₁-p₂| kalibriert wird.

4. Verfahren nach Anspruch 3, **dadurch gekennzeichnet, dass** die Druckdifferenz |p₁-p₂| zwischen den beiden unstetigen Druckänderungen herangezogen wird, um bei bekannter Länge L des Tauchrohres (2) zwischen Austrittsende (4) und Querschnittsveränderung (3) die Steilheit S des Drucksensors (6) mit Hilfe des hydrostatischen Druckes p(L) der Flüssigkeitssäule zu bestimmen.

5. Verfahren nach Anspruch 1 und 2, **dadurch gekennzeichnet, dass** die Zeitspanne T gemessen wird, welche die Pumpeinrichtung (5) benötigt um die Flüssigkeitssäule vom Austrittsende (4) des Tauchrohrs (2) bis zur Querschnittsveränderung (3) oder umgekehrt von der Querschnittsveränderung (3) zum Austrittsende (4) zu bewegen, dass die Flüssigkeitssäule ausgehend vom jeweiligen Füllstand beim Umgebungsdruck p₀ bis zum Austrittsende (4) oder bis zur Querschnittsveränderung (3) bewegt wird und die dafür nötige Zeit t₁ oder t₂ gemessen und mit der Zeitspanne T kalibriert wird.

6. Verfahren nach Anspruch 1 und 2, **dadurch gekennzeichnet, dass** die Zeitspanne T, welche die Pumpeinrichtung (5) benötigt um die Flüssigkeitssäule vom Austrittsende (4) des Tauchrohrs (2) bis zur Querschnittsveränderung (3) oder umgekehrt von der Querschnittsveränderung (3) zum Austrittsende (4) zu bewegen, herangezogen wird, um bei bekanntem Volumen V des Tauchrohres (2) zwischen Austrittsende (4) und Querschnittsveränderung (3) die Pumpleistung Δv/Δt aus dem Verhältnis V/T zu bestimmen.

7. Verfahren nach einem der Ansprüche 1 bis 3 oder 5, **dadurch gekennzeichnet, dass** zur Bestimmung der Füllstände mehrerer Behälter (1, 8) einer Vorrichtung die Tauchrohre (2) der einzelnen Behälter (1, 8) der Reihe nach dem Leitungssystem (15) zugeschaltet werden.

8. Verfahren zur Bestimmung der Pumpleistung einer Pumpeinrichtung (5), welche über ein Leitungssystem (15) mit einem Tauchrohr (2) zum Befüllen oder Entleeren eines Behälters (1) mit einer Flüssigkeit verbunden ist, wobei das Tauchrohr (2) in die Flüssigkeit eintaucht, **dadurch gekennzeichnet, dass** der Druck p im Leitungssystem (15) gemessen und ausgehend vom Umgebungsdruck p₀ so weit erhöht wird, bis durch den Austritt der sich im Tauchrohr (2) befindenden Flüssigkeitssäule eine erste unstetige Druckänderung auftritt, dass der Druck p im Leitungssystem (15) so weit abgesenkt wird, bis die Flüssigkeitssäule im Tauchrohr (2) bis zu einer über dem maximalen Füllstand der Flüssigkeit liegenden Querschnittsveränderung (3) gelangt, so dass durch den Kontakt der Flüssigkeitssäule mit der Querschnittsveränderung (3) eine zweite unstetige Druckänderung auftritt, dass die Zeitspanne T, welche die Pumpeinrichtung (5) benötigt um die Flüssigkeitssäule von einer der beiden unstetigen Druckänderung zur anderen zu bewegen, herangezogen wird, um bei bekanntem Volumen V des Tauchrohres (2) zwischen Austrittsende (4) und Querschnittsveränderung (3) die Pumpleistung Δv/Δt aus dem Verhältnis V/T zu bestimmen.

9. Verfahren nach einem der Ansprüche 1 bis 7, **dadurch gekennzeichnet, dass** der aktuelle Füllstand eines Kalibrier-, Qualitätskontroll- oder Reinigungsmittels oder von Abwasser in dem Behälter (1) eines Analysators gemessen wird.

## Claims

1. Method for filling a liquid into or draining a liquid from a container (1) of an analyzer and for determining the current filling level of the liquid in said container (1) by means of a common immersion pipe (2) dipping into the liquid of the container (1), where filling or draining of the liquid is carried out via the immersion pipe (2), which is connected by a tube system (15) to a pumping device (5) and can be supplied with a gaseous medium, preferably air, and where determination of the current filling level of the liquid in the container (1) is achieved by measuring over time the pressure p in the tube system (15) by means of a pressure sensor (6) and by increasing the pressure p, starting at ambient pressure p₀, until a discontinuous pressure change occurs at a pressure level p₁ due to the liquid column in the immersion pipe (2) exiting from said pipe, and where the pressure difference between ambient pressure p₀ and pressure p₁ at the discontinuous pressure change or the time t₁ required to reach the discontinuous pressure change, is determined and the current filling level of the container (1) is computed therefrom.

2. Method for filling a liquid into or draining a liquid from a container (1) of an analyzer and for determining the current filling level of the liquid in said container (1) by means of a common immersion pipe (2) dipping into the liquid of the container (1), where filling or draining of the liquid is carried out via the immersion pipe (2), which is connected by a tube system (15) to a pumping device (5) and can be supplied with a gaseous medium, preferably air, and where determination of the current filling level of the liquid in said container (1) is achieved by measuring over time the pressure p in the tube system (15) by means of a pressure sensor (6) and by decreasing the pressure p, starting at ambient pressure p₀, until the liquid column in the immersion pipe (2) reaches a site of cross-sectional change (3) located above the maximum filling level of the liquid, thereby causing a discontinuous pressure change at a pressure level p₂ due to the liquid column encountering said site (3), and where the pressure difference between ambient pressure p₀ and pressure p₂ at the discontinuous pressure change or the time t₂ required to reach the discontinuous pressure change, is determined and the current filling level of the container (1) is computed therefrom.

3. Method according to claims 1 and 2, **characterised in that** the pressure difference measured between the ambient pressure p₀ and the pressure p₁ or p₂ at one of the two pressure discontinuities is calibrated by the absolute value of the pressure difference |p₁-p₂|.

4. Method according to claim 3, **characterised in that** the pressure difference |p₁-p₂| between the two pressure discontinuities is used to determine the slope S of the pressure sensor (6) by means of the hydrostatic pressure p(L) of the liquid column and the known length L of the immersion pipe (2) between exit end (4) and the site of cross-sectional change (3).

5. Method according to claims 1 and 2, **characterised in that** the time period T is determined, which is required by the pumping device (5) to move the liquid column from the exit end (4) of the immersion pipe (2) to the site of cross-sectional change (3) or, vice versa, from the site of cross-sectional change (3) to the exit end (4), and that, departing from the filling level at ambient pressure p₀, the liquid column is moved to the exit end (4) or to the site of cross-sectional change (3) and the required time t₁ or t₂ is determined and calibrated by the time period T.

6. Method according to claims 1 and 2, **characterised in that** the time period T, which is required by the pumping device (5) to move the liquid column from the exit end (4) of the immersion pipe (2) to the site of cross-sectional change (3) or, vice versa, from the site of cross-sectional change (3) to the exit end (4), is employed to determine the pumping rate Δv/Δt from the ratio V/T, where V is the known volume of the immersion pipe (2) between exit end (4) and site of cross-sectional change (3).

7. Method according to any of claims 1 to 3 or 5, **characterised in that,** in order to measure the filling levels of a plurality of containers (1, 8), the immersion pipes (2) of the individual containers (1, 8) are connected to the tube system (15) one after the other.

8. Method for determining the pumping rate of a pumping device (5), which is connected by a tube system (15) to an immersion pipe (2) for the filling or draining of liquid into or from a container (1), said immersion pipe (2) dipping into the liquid, **characterised in that** the pressure p in the tube system (15) is measured and increased, starting from ambient pressure p₀, until a first discontinuous pressure change occurs due to the liquid column in the immersion pipe (2) being forced out of said pipe, and that the pressure p in the tube system (15) is decreased until the liquid column in the immersion pipe (2) reaches a site of cross-sectional change (3) situated above the maximum filling level of the liquid, thus causing a second discontinuous pressure change due to the liquid column encountering said site (3), and that the time period T, which is required by the pumping device (5) to move the liquid column from the site of one discontinuous pressure change to the site of the other, is used to determine the pumping rate Δv/Δt from the ratio V/T, where V is the known volume of the immersion pipe (2) between exit end (4) and site of cross-sectional change (3).

9. Method according to any of claims 1 to 7, **characterised in that** the current filling level of a calibrating, quality control, or cleaning medium, or waste water in the container (1) of an analyzer is measured.

## Revendications

1. Procédé pour verser un liquide ou pour prélever un liquide dans un réservoir (1) d'un analyseur et pour déterminer le niveau actuel du liquide dans ce réservoir (1) au moyen d'un tube plongeur (2) commun plongeant dans le liquide du réservoir (1), le versement ou le prélèvement du liquide s'effectuant à travers le tube plongeur (2), lequel est relié à un dispositif de pompage (5) par l'intermédiaire d'un système de conduit (15) et peut être alimenté avec un milieu gazeux, de préférence de l'air, et la détermination du niveau actuel du liquide dans ce réservoir (1) s'effectuant grâce au fait que la pression p régnant dans le système de conduit (15) conformément à la variation de pression en fonction du temps, est mesurée par un capteur de pression (6) et augmentée à partir de la pression ambiante p₀ jusqu'à ce que, à une pression p₁, une modification de pression non constante se produise par la sortie de la colonne de liquide se trouvant dans le tube plongeur (2), la différence de pression entre la pression ambiante p₀ et la pression p₁ lors de la modification de pression non constante ou le temps t₁ jusqu'à atteindre ladite modification de pression non constante étant déterminé(e) et utilisé(e) pour calculer le niveau actuel du réservoir (1).

2. Procédé pour verser un liquide ou pour prélever un liquide dans un réservoir (1) d'un analyseur et pour déterminer le niveau actuel du liquide dans ce réservoir (1) au moyen d'un tube plongeur (2) commun plongeant dans le liquide du réservoir (1), le versement ou le prélèvement du liquide s'effectuant à travers le tube plongeur (2), lequel est relié à un dispositif de pompage (5) par l'intermédiaire d'un système de conduit (15) et peut être alimenté avec un milieu gazeux, de préférence de l'air, et la détermination du niveau actuel du liquide dans ce réservoir (1) s'effectuant grâce au fait que la pression p régnant dans le système de conduit (15) conformément à la variation de pression en fonction du temps, est mesurée par un capteur de pression (6) et abaissée à partir de la pression ambiante p₀ jusqu'à ce que la colonne de liquide dans le tube plongeur (2) parvienne jusqu'à une modification de section (3) située au-dessus du niveau maximum du liquide de sorte que, à une pression p₂, une modification de pression non constante se produise par le contact de la colonne de liquide avec ladite modification de section (3), la différence de pression entre la pression ambiante p₀ et la pression p₂ lors de la modification de pression non constante ou le temps t₂ jusqu'à atteindre ladite modification de pression non constante étant déterminé(e) et utilisé(e) pour calculer le niveau actuel du réservoir (1).

3. Procédé selon les revendications 1 et 2, **caractérisé en ce que** la différence de pression mesurée entre la pression ambiante p₀ et la pression p₁ ou p₂ lors d'une des deux modifications de pression non constantes est calibrée avec le montant de la différence de pression |p₁-p₂|.

4. Procédé selon la revendication 3, **caractérisé en ce que** la différence de pression |p₁-p₂| entre les deux modifications de pression non constantes est utilisée pour déterminer pour une longueur L connue du tube plongeur (2) entre extrémité de sortie (4) et modification de section (3), la pente S du capteur de pression (6) à l'aide de la pression hydrostatique p(L) de la colonne de liquide.

5. Procédé selon les revendications 1 et 2, **caractérisé en ce que** l'intervalle de temps T est mesuré, lequel est nécessaire au dispositif de pompage (5) pour amener la colonne de liquide de l'extrémité de sortie (4) du tube plongeur (2) jusqu'à la modification de section (3) ou inversement de la modification de section (3) à l'extrémité de sortie (4), **en ce que** la colonne de liquide, en partant du niveau respectif à la pression ambiante p₀, est amenée jusqu'à l'extrémité de sortie (4) ou jusqu'à la modification de section (3) et **en ce que** le temps t₁ ou t₂ nécessaire à cet effet est mesuré et calibré avec ledit intervalle de temps T.

6. Procédé selon les revendications 1 et 2, **caractérisé en ce que** l'intervalle de temps T nécessaire au dispositif de pompage (5) pour amener la colonne de liquide de l'extrémité de sortie (4) du tube plongeur (2) jusqu'à la modification de section (3) ou inversement de la modification de section (3) à l'extrémité de sortie (4) est utilisé pour déterminer pour un volume V connu du tube plongeur (2) entre extrémité de sortie (4) et modification de section (3), la puissance de pompage Δv/Δt à partir du rapport V/T.

7. Procédé selon l'une des revendications 1 à 3 ou 5, **caractérisé en ce que** pour déterminer les niveaux de plusieurs réservoirs (1, 8) d'un dispositif, les tubes plongeurs (2) des différents réservoirs (1, 8) sont raccordés dans l'ordre au système de conduit (15).

8. Procédé pour déterminer la puissance de pompage d'un dispositif de pompage (5), lequel est relié par l'intermédiaire d'un système de conduit (15) à un tube plongeur (2) destiné à remplir ou à vider un réservoir (1) d'un liquide, ledit tube plongeur (2) plongeant dans le liquide, **caractérisé en ce que** la pression p régnant dans le système de conduit (15) est mesurée et augmentée à partir de la pression ambiante p₀ jusqu'à ce qu'une première modification de pression non constante se produise par la sortie de la colonne de liquide se trouvant dans le tube plongeur (2), **en ce que** la pression p régnant dans le système de conduit (15) est abaissée jusqu'à ce que la colonne de liquide dans le tube plongeur (2) parvienne jusqu'à une modification de section (3) située au-dessus du niveau maximum du liquide de sorte qu'une seconde modification de pression non constante se produise par le contact de la colonne de liquide avec ladite modification de section (3), **en ce que** l'intervalle de temps T nécessaire au dispositif de pompage (5) pour amener la colonne de liquide d'une des deux modifications de pression non constantes à l'autre, est utilisé pour déterminer pour un volume V connu du tube plongeur (2) entre extrémité de sortie (4) et modification de section (3), la puissance de pompage Δv/Δt à partir du rapport V/T.

9. Procédé selon l'une des revendications 1 à 7, **caractérisé en ce que** le niveau actuel d'un produit de calibrage, de contrôle de qualité ou de nettoyage ou encore d'eaux usées est mesuré dans le réservoir (1) d'un analyseur.
